# EUROPEAN PATENT APPLICATION

(11) **EP 2 067 559 A1**
(43) Date of publication of application: **10.06.2009**
(21) Application number: 08170294.6
(22) Date of filing: 28.11.2008
(51) Int. Cl.: B23D 63/16

(54) **Device for sharpening a cutting chain for chainsaws**

(30) Priority: 05.12.2007 IT MI20070404 U
(71) Applicant: Berni, Nicola, 42045 Luzzara RE (IT)
(72) Inventor: Berni, Nicola, 42045 Luzzara RE (IT)
(74) Representative: Modiano, Micaela Nadia

(57) **Abstract**

A device (1) for sharpening a cutting chain (4) for chainsaws, comprising a base body (2) that defines a region (3) for positioning the cutting chain (4), the base body (2) being associated with a sharpening head (10) that can be positioned angularly with respect to cutting teeth of the cutting chain (4) and can move toward and away from the cutting chain (4), the device further comprising an autonomous electric power source (31) for a motor (21) that drives the sharpening head (10).

## Description

The present invention relates to a device for sharpening a cutting chain for chainsaws.

As is known, devices are already commercially available which sharpen the cutting chain of chainsaws and generally comprise a base body that defines a region for positioning a cutting chain at which the sharpening head is actuated; such head can be positioned angularly according to the cutting edge of the cutting tooth and can oscillate in order to be moved toward and away from the chain.

The sharpening head comprises a motor that drives a grinding wheel that performs the sharpening; the motor typically can be connected to the electric mains by means of a cable.

This type of embodiment necessarily entails that cutting chains for chainsaws can be sharpened only in a workshop or in any case in places where an electrical power supply is available.

This fact obviously is particularly constraining if one considers that chainsaws are typically used in woods, where an electric power supply is quite often not available.

The aim of the invention is indeed to solve the problem described above, by providing a device for sharpening a cutting chain for chainsaws that can be used in any place where its use is necessary.

Within this aim, an object of the invention is to provide a device that is particularly handy and portable, thus allowing to be transported wherever needed.

Another object of the present invention is to provide a device which, thanks to its particular constructive characteristics, is capable of giving the greatest assurances of reliability and safety in use.

Still another object of the present invention is to provide a device for sharpening the cutting chain for chainsaws that can be obtained easily starting from commonly commercially available elements and materials and is also competitive from a merely economical standpoint.

This aim, as well as these and other objects that will become better apparent hereinafter, are achieved by a device for sharpening a cutting chain for chainsaws, according to the invention, comprising a base body that defines a region for positioning the cutting chain, said base body being associated with a sharpening head that can be positioned angularly with respect to cutting teeth of said cutting chain and can move toward and away from said cutting chain, characterized in that it comprises an autonomous electric power source for the motor that drives said sharpening head.

Further characteristics and advantages of the present invention will become better apparent from the detailed description of a device for sharpening a cutting chain for chainsaws, illustrated by way of non-limiting example in the accompanying drawings, wherein:

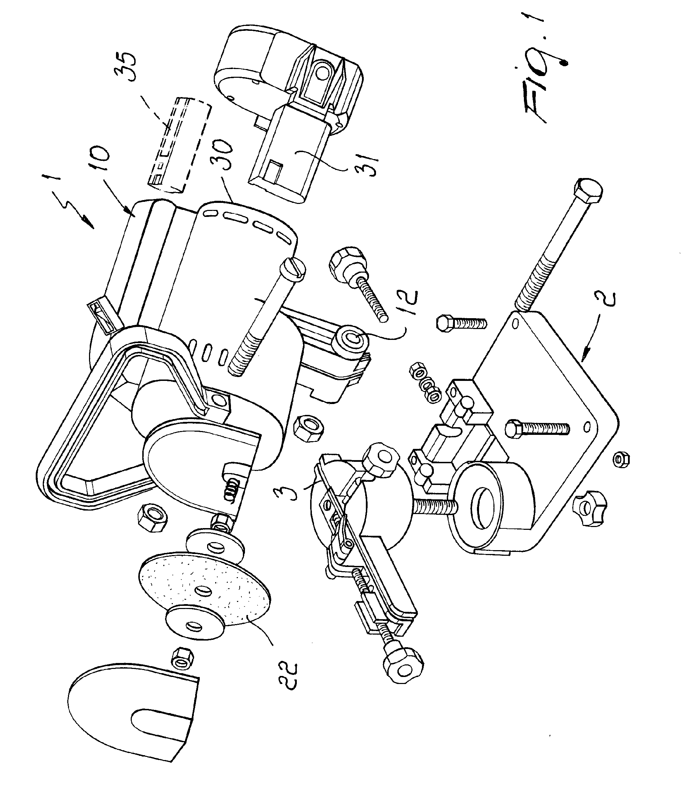

Figure 1 is an exploded perspective view of a device for sharpening a cutting chain for chainsaws;

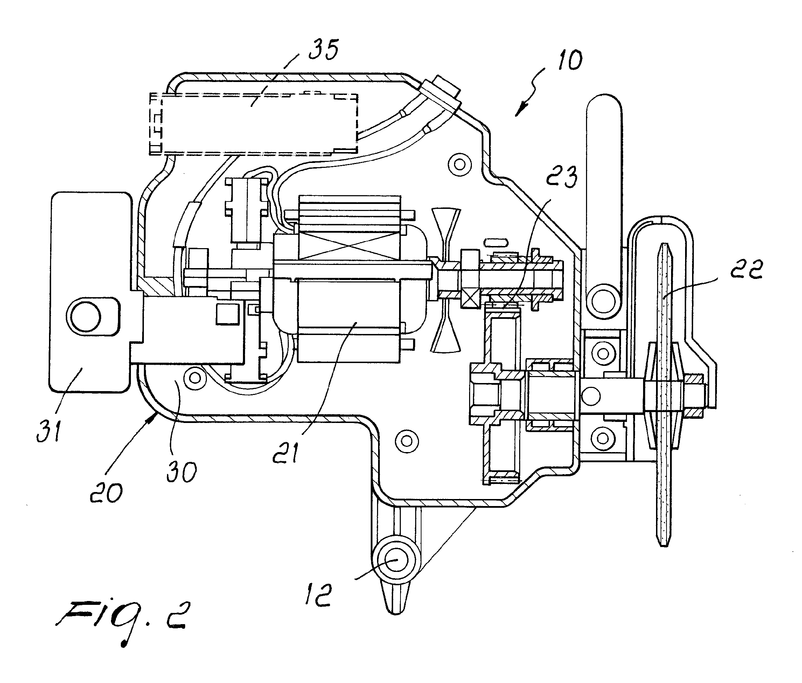

Figure 2 is a view of the detail of the sharpening head, with the containment enclosure shown in cross-section;

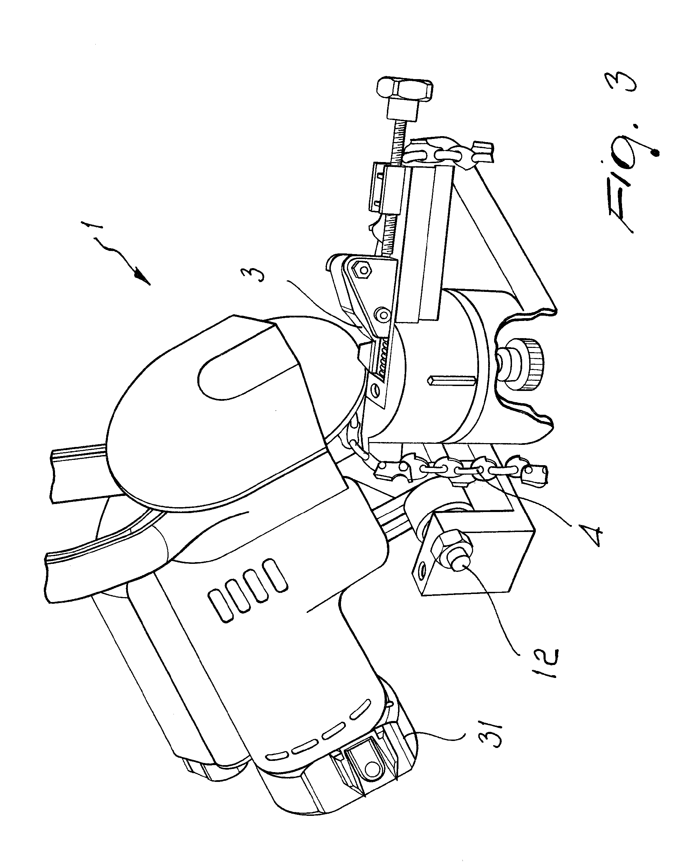

Figure 3 is a schematic view of the step of use of the device.

With reference to the figures, the device for sharpening a cutting chain for chainsaws, generally designated by the reference numeral 1, comprises a base body 2, which defines a region 3 for positioning a cutting chain, generally designated by the reference numeral 4.

The device can be of the type in which the cutting chain has to be removed from the chainsaw or, optionally, the device might also be preset so as to connect directly the guiding blade of the cutting chain.

A sharpening head, generally designated by the reference numeral 10, is associated with the base body 2 and can be positioned angularly with respect to the positioning region of the cutting chain 4 thanks to the fact that it can rotate about the cutting region 3 or thanks to the fact that the cutting region 3 can rotate about a first axis, so as to position angularly the sharpening head with respect to the cutting edge of the cutting teeth of the cutting chain.

Moreover, the sharpening head 10 can oscillate about a second axis, designated by the reference numeral 12, which allows to perform approach and spacing with respect to the positioning region of the cutting chain 4.

The sharpening head 10 has an outer enclosure 20, which contains a driving motor 21, which acts on a grinding wheel 22, optionally by means of a step-down kinematic chain 23 of a per se known type.

The peculiar characteristic of the invention consists in that the enclosure 20 defines a seat 30 for the detachable accommodation of an autonomous electric power source for the driving motor 21, which in practice is constituted by a rechargeable battery 31, which can be of the removable type, or optionally of the type that can be recharged by means of an appropriately provided socket provided on the enclosure of the sharpening head.

Optionally, the device can be provided so that the enclosure 20 defines a cylindrical seat for accommodating a bar-type battery, designated by the reference numeral 35, also of the rechargeable type.

With the described arrangement, therefore, a device is provided in which the power supply of the motor 21 for driving the grinding wheel 22 is provided by means of a rechargeable battery, which can be simply replaced or recharged directly within the enclosure that contains the motor.

In practice, the materials used, so long as they are compatible with the specific use, as well as the contingent shapes and dimensions, may be any according to requirements.

The disclosures in Italian Utility Model Application no. MI2007U000404, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (1) for sharpening a cutting chain (4) for chainsaws, comprising a base body (2) that defines a region (3) for positioning the cutting chain (4), said base body (2) being associated with a sharpening head (10) that can be positioned angularly with respect to cutting teeth of said cutting chain (4) and can move toward and away from said cutting chain, **characterized in that** it comprises an autonomous electric power source (31) for a motor (21) that drives said sharpening head (10).

2. The device according to claim 1, **characterized in that** said autonomous electric power source (31) comprises a rechargeable battery (31).

3. The device according to claim 2, **characterized in that** said rechargeable battery (31) is removable.

4. The device according to one or more of the preceding claims, **characterized in that** said rechargeable battery (31) can be recharged by means of a socket provided on a containment enclosure (20) of the sharpening head (10).

5. The device according to one or more of the preceding claims, **characterized in that** said rechargeable battery (31) is constituted by a bar-type battery (35).

6. Use of a device according to one or more of the preceding claims, **characterized in that** said cutting chain (4) is arranged on the cutting blade of the chainsaw.

7. Use of a device according to one or more of the preceding claims, **characterized in that** said cutting chain (4) is sharpened when removed from the chainsaw.
